# EUROPÄISCHE PATENTSCHRIFT

(11) **EP 3 896 869 B1**
(45) Veröffentlichungstag und Bekanntmachung des Hinweises auf die Patenterteilung: **11.09.2024**
(21) Anmeldenummer: 20169852.9
(22) Anmeldetag: 16.04.2020
(51) Int. Cl.: H04B 7/185

(54) **VERFAHREN ZUM AUFBAUEN EINER SATELLITENKOMMUNIKATIONSVERBINDUNG VON EINEM SATELLITENTELEFON ZU EINEM KOMMUNIKATIONSSATELLITEN UND SATELLITENTELEFON ZUM AUSFÜHREN EINES SOLCHEN VERFAHRENS**
METHOD FOR ESTABLISHING A SATELLITE COMMUNICATION LINK FROM A SATELLITE TELEPHONE TO A COMMUNICATION SATELLITE AND SATELLITE TELEPHONE FOR CARRYING OUT SUCH A METHOD
PROCÉDÉ D'ÉTABLISSEMENT D'UNE CONNEXION DE COMMUNICATION SATELLITE D'UN TÉLÉPHONE SATELLITE À UN SATELLITE DE COMMUNICATION ET TÉLÉPHONE SATELLITE DESTINÉ À LA MISE EN UVRE D'UN TEL PROCÉDÉ

(43) Veröffentlichungstag der Anmeldung: 20.10.2021
(73) Patentinhaber: Deutsche Telekom AG, 53113 Bonn (DE)
(72) Erfinder: WITYCH, Michael, 53227 Bonn (DE)
(74) Vertreter: Blumbach · Zinngrebe Patentanwälte PartG mbB

(56) Entgegenhaltungen:
- US-A1- 2008 165 840
- US-B1- 6 421 528
- US-B2- 7 089 115

## Beschreibung

Die Erfindung betrifft ein Verfahren zum Aufbauen einer Satellitenkommunikationsverbindung von einem Satellitentelefon zu einem Kommunikationssatelliten eines satellitenbasierten Kommunikationssystems sowie ein Satellitentelefon zum Ausführen eines solchen Verfahrens.

Bei der mobilen Satellitenkommunikation können bidirektionale und unidirektionale Telekommunikationsverbindungen zwischen Satellitentelefonen, welche sich vorzugsweise auf der Erdoberfläche befinden, über ein satellitenbasiertes Kommunikationssystem hergestellt werden. Hierzu muss ein rufendes Satellitentelefon jedoch zunächst eine Kommunikationsverbindung zu einem Kommunikationssatelliten des satellitenbasierten Kommunikationssystems aufbauen. Die Kommunikationssatelliten umkreisen hierbei auf verschiedenen Umlaufbahnen die Erde. Je nach Höhe werden die Umlaufbahnen unter anderem in niedrige, d.h. erdnahe Erdumlaufbahnen, sogenannte Low Earth Orbits (LEO), und mittlere Erdumlaufbahnen, sogenannte Medium Earth Orbit (MEO), eingeteilt. Unter der URL "https://de.wikipedia.org/wiki/Satellitenorbit" findet sich eine Abbildung mit den üblichen Satellitenhöhen und Bahngeschwindigkeiten.

Für zeitkritische Kommunikationsanwendungen, wie zum Beispiel Multimedia- oder Sprachanwendungen, die geringe Signalumlaufzeiten im Millisekundenbereich verlangen, werden LEO-Satelliten-Kommunikationssysteme eingesetzt, deren Kommunikationssatelliten auf niedrigen Erdumlaufnahen (z.B. in Höhen zwischen 200 bis 2000km) die Erde umkreisen. Kommunikationssatelliten, die auf niedrigen Erdumlaufbahnen die Erde umkreisen, werden kurz auch LEO-Kommunikationssatelliten genannt. Um eine globale Netzabdeckung zu erzielen, werden eine Vielzahl von LEO-Kommunikationssatelliten benötigt, deren Antennen auf der Erdoberfläche sich überlappende Footprints, d.h. Ausleuchtungszonen, erzeugen. Auf diese Weise können mehrere alternative Satelliten-Kommunikationsverbindungen zu unterschiedlichen Satelliten für einen Standpunkt auf der Erde genutzt werden.

Ein bekanntes globales Satellitenkommunikationssystem für die mobile Satellitenkommunikation ist das Iridium-Satellitenkommunikationssystem, welches beispielsweise im Internet unter der URL "https://en.wikipedia.org/wiki/Iridium Communications" näher beschrieben ist. Das Iridium-Kommunikationsnetz weist 66 Satelliten auf, die auf sechs erdnahen Umlaufbahnen, sogenannten Low Earth Orbits, verteilt die Erde umkreisen. Hierbei umkreisen vorzugsweise jeweils 11 Satelliten auf einer Umlaufbahn die Erde, wobei die Umlaufbahnen vorzugsweise Polumlaufbahnen sind, die im Wesentlichen durch den geographischen Nord- und Südpol verlaufen. Die 66 Iridium-Kommunikationssatelliten ermöglichen eine unterbrechungsfreie Satellitenkommunikation, indem sie eine globale Netzabdeckung erzielen. Hierzu strahlen die Antennen aller Kommunikationssatelliten Energie in einer Richtung zur Erdoberfläche ab, wodurch sich teilweise überlappende Footprints, auch Ausleuchtungszonen genannt, auf die Erdoberfläche projiziert werden. Die Footprints wandern synchron mit der Bewegung der Kommunikationssatelliten und in Abhängigkeit davon, dass sich die Erde unter den Umlaufbahnen dreht, auf unterschiedlichen Pfaden über die Erdoberfläche. Allerdings ist die Wanderung der Footprints über die Erdoberfläche und die Überlappung der Footprints relativ starr auf ein und derselben geographischen Breite, da die Antennen aller Kommunikationssatelliten Energie in einer fest vorgegebenen Richtung zur Erdoberfläche, nämlich in Richtung zum Erdmittelpunkt, abstrahlen. Zu den Polen hin werden die Überlappungsbereich der Footprints größer. Auf Höhe des Äquators sind sie minimal.

Für nicht zeitkritische Kommunikationsanwendungen, wie zum Beispiel Kurznachrichtendienste, kann auch ein Satellitenkommunikationsnetz genutzt werden, dessen Kommunikationssatelliten die Erde zum Beispiel auf mittleren Umlaufbahnen, sogenannten Medium Earth Orbits (MEO) umkreisen. Gegebenenfalls können LEO-Satelliten und MEO-Satelliten gleichzeitig genutzt werden und sogar Interkommunikations-Lösungen zwischen LEOs und MEOs eingeplant werden.

Aus US 2008/165840 A1 ist ein Satellitenkommunikationssystem bekannt, bei welchem ein Modulations- und Kodierungsformat für eine Abwärtsverbindung auf der Grundlage der Schrägentfernung vom Satelliten zu dem empfangenden Bodenterminal angepasst wird.

In US 7 089 115 B2 wird ein Verfahren zur Bestimmung des Skyview-Faktors an einem Standort beschrieben, wobei Daten von mindestens einem Global-Positioning-Satelliten an dem Standort empfangen und mit einer vordefinierten mathematischen Funktion verglichen werden, wobei die Funktion empirisch aus entsprechenden GPS-Daten abgeleitet wird, die von Referenzstandorten beschafft werden, an denen der Skyview-Faktor bekannt ist, wodurch man zu einem Näherungswert des Skyview-Faktors an dem Standort gelangt.

Aus US 6 421 528 B1 ist ein System und ein Verfahren zum Einstellen der Sendeleistung von Satellitenkommunikationssignalen für Signale, die an einen lokalisierten Bereich innerhalb eines Satellitenabdeckungsgebiets übertragen werden, bekannt, wobei Echtzeitinformationen über Wetterbedingungen und/oder tatsächliche Pfadverluste innerhalb der lokalisierten Bereiche verwendet werden, um die effektive isotrope Strahlungsleistung (EIRP) der Satellitenstrahlen einzustellen, um die für die Übertragung erforderliche Gesamtleistung zu minimieren.

Um über ein satellitenbasiertes Kommunikationssystem eine Kommunikationsverbindung von einem rufenden Satellitentelefon beispielsweise zu einem gerufenen Satellitentelefon erstellen zu können, muss initial vom rufenden Satellitentelefon eine Verbindung zu einem sichtbaren Kommunikationssatelliten aufgebaut werden. Bekannt sind Apps, mit denen ein Satellitentelefon den aktuellen Standort von Iridium-Satelliten in Abhängigkeit von aktuellen Satellitenbahndaten berechnen kann. Auf diese Weise kann ein Satellitentelefon beispielsweise die Standorte aller Iridium-Satelliten für die nächsten 2 Stunden bestimmen. Demzufolge ist das Satellitentelefon in der Lage, initial eine Kommunikationsverbindung zu einem Satelliten aufzubauen. Idealerweise wählt das rufende Satellitentelefon den jeweils gerade im Zenit stehenden Iridium-Satelliten aus. Genaueres hierzu findet sich beispielsweise unter der URL HTTPS: //de.wikipedia.org/wiki/iridium_(Kommunikationssystem).

Zudem sind Satellitentelefone in der Lage, die Signalstärke von Kommunikationssatelliten empfangenen Signalen, zu denen jeweils eine Sichtverbindung, Line-of-Sight (LOS) genannt, ermitteln kann. Ein bekanntes Auswahlkriterium besteht darin, dass das Satellitentelefon denjenigen Kommunikationssatelliten für einen initialen Verbindungsaufbau auswählt, dessen Empfangssignalstärke zu einem aktuellen Zeitpunkt am stärksten ist. Idealerweise wird das der gerade im Zenit stehende Satellit sein.

Der Erfindung liegt die Aufgabe zugrunde, ein Verfahren sowie ein Satellitentelefon bereitzustellen, mit denen es möglich ist, bei einem initialen Verbindungsaufbau zuverlässiger als bisher einen geeigneten Kommunikationssatelliten zu finden.

Ein Kerngedanke der Erfindung kann darin gesehen werden, die Qualität der Datenübertragung zwischen einem Satellitentelefon und unterschiedlichen Kommunikationssatelliten nicht nur in Abhängigkeit von der Position der Kommunikationssatelliten, zu denen eine Sichtverbindung zum rufenden Satellitentelefon besteht, von der Position des rufenden Satellitentelefons, von dem Höhenwinkel, unter dem der jeweilige Kommunikationssatellit vom Satellitentelefon angezielt wird, sondern auch von Wettervorhersagen, die für das rufende Satellitentelefon zumindest zu einem aktuellen Zeitpunkt von Bedeutung sind, zu berücksichtigen.

Das oben genannte technische Problem wird sowohl durch die Verfahrensschritte des Anspruchs 1 als auch durch die Merkmale des Anspruchs 9 gelöst.

Vorteilhafte Ausbildungen und Weiterentwicklungen sind Gegenstand der abhängigen Ansprüche.

Die Erfindung wird nachfolgend anhand eines Ausführungsbeispiels in Verbindung mit den beiliegenden Zeichnungen näher erläutert. Es zeigen:
- Fig. 1: ein beispielhaftes satellitenbasiertes Kommunikationssystem, in welchem die Erfindung verwirklicht ist, und
- Fig. 2: das in Fig. 1 gezeigte Satellitentelefon als Blockschaltbild.

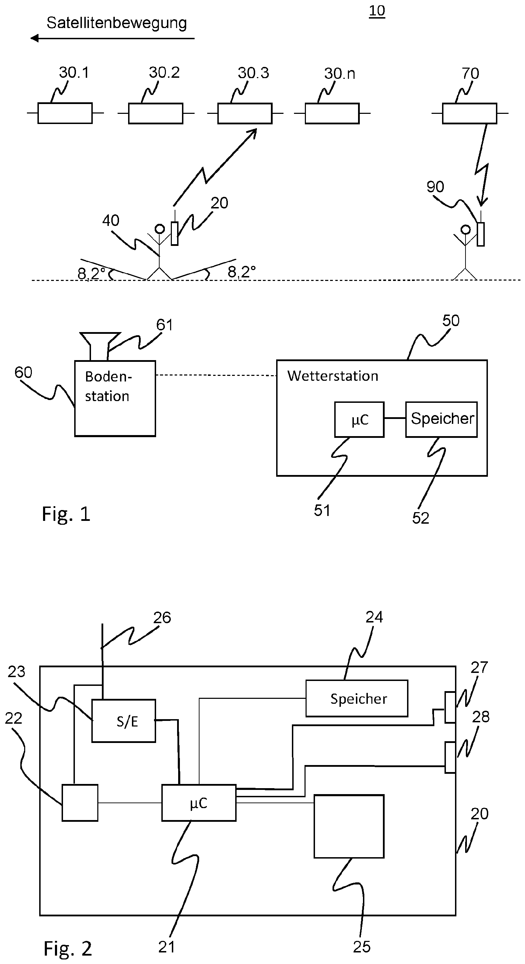

Das in Fig. 1 gezeigte Satellitentelefon zeigt ein beispielhaftes, schematisch und auszugsweise dargestelltes satellitenbasiertes Kommunikationssystem 10, welches mehrere Kommunikationssatelliten 30.1-30.n, 70, wenigstens eine Bodenstation 60 und eine Wetterstation 50 aufweisen kann. In dem dargestellten Ausschnitt sind

Kommunikationssatelliten 30.1 bis 30.n dargestellt, zu denen zu einem aktuellen Zeitpunkt t0 jeweils eine Sichtverbindung von dem Satellitentelefon 20 eines Benutzers 40 besteht. Theoretisch kann man davon ausgehen, dass bei klarer Sicht zum Himmel ab einem Höhenwinkel von 8,2° in alle Richtungen eine Sichtverbindung besteht. Dieser hauptsächlich nur in der Theorie existierende Zustand ist in Fig. 1 beispielhaft durch die eingezeichneten Höhenwinkel von 8.2° angedeutet.

Bei dem beispielhaften satellitenbasierten Kommunikationssystem 10 kann es sich um das Iridium-Satellitenkommunikationssystem handeln, welches 66 Kommunikationssatelliten aufweist die, auf sechs Umlaufbahnen verteilt, die Erde umkreisen. Auf jeder Umlaufbahn umkreisen jeweils 11 Kommunikationssatelliten die Erde. Bei den Umlaufbahnen kann es sich um Polbahnen handeln. Die Kommunikationssatelliten des beispielhaften satellitenbasierten Kommunikationssystems 10 sind in bekannter Weise dazu ausgebildet, eine Satellitenkommunikationsverbindung, die beispielsweise von dem rufenden Satellitentelefon 20 eingeleitet worden ist, zu einem gerufenen Satellitentelefon 90 herzustellen. Angenommen sei, dass ein initialer Verbindungsaufbau von einem rufenden Satellitentelefon, beispielsweise dem Satellitentelefon 20, zu einem bevorzugten Kommunikationssatelliten, zu dem eine Sichtverbindung zu einem aktuellen Zeitpunkt t0 besteht, aufgebaut werden soll. Dieses Szenario wird weiter unten noch näher erläutert.

Wie in der Fig. 1 weiter gezeigt, ist wenigstens eine Wetterstation 50 vorgesehen, die unter anderem einen Rechner, hier symbolisch durch einen Mikrocontroller 51 dargestellt, und eine Speichereinrichtung 52 aufweisen kann. Die Wetterstation 50 kann dazu ausgebildet sein, rechnergestützte lokale und/oder globale Wettervorhersagen, d. h. die entsprechenden zeit- und ortsabhängigen meteorologischen Daten zu berechnen und in der Speichereinrichtung 52 zur weiteren Verwendung zwischen zu speichern. Die zeit - und ortsabhängigen meteorologischen Daten, die die Wettervorhersagen beschreiben, können von der Wetterstation 50 zu der Bodenstation 60 übertragen werden. Die Bodenstation 60 kann dann die zeit- und ortsabhängigen meteorologischen Daten über eine drahtlose Sende-/Empfangseinrichtung 61 unter anderem zu dem Satellitentelefon 20 übertragen. Denkbar ist in diesem Zusammenhang, dass zum Beispiel die Bodenstation 60 den aktuellen Standpunkt des Satellitentelefons 20 auf der Erdoberfläche kennt und deshalb nur diejenigen zeit- und ortsabhängigen meteorologischen Daten zu dem Satellitentelefon 20 übertragen, die für das Satellitentelefon 20 sowohl zeitlich als auch geographisch von Bedeutung sind. Hinsichtlich des bekannten Iridium-Satellitenkommunikationssystems ist bekannt, dass die Kommunikationsverbindung zwischen dem rufenden Satellitentelefon 20 und einem Kommunikationssatelliten etwa alle 9 Minuten gewechselt werden muss. Vor diesem Hintergrund kann es effizient sein, dass in dem Satellitentelefon 20 immer nur die zeit- und ortsabhängigen meteorologischen Daten vorliegen, die beispielsweise für ein Zeitintervall von 10 Minuten beginnend ab einem aktuellen Zeitpunkt t0 zur Verfügung gestellt und regelmäßig oder kontinuierlich, beispielsweise alle 2 Minuten aktualisiert werden. Dies hat den Vorteil, dass die eine in Fig. 2 gezeigte Steuereinheit 21 des Satellitentelefons 20 immer nur eine begrenzte Datenmenge, die Wettervorhersage betreffen, verarbeiten muss. Diese Daten müssen, je nach Implementierung, auch nur dann aufdatiert werden, wenn sie eine relevante Änderung beinhalten, so dass eine initiale Wettersituation, die sich nicht relevant ändert, auch nicht als Update an das Satellitentelefon 20 übertragen werden muss.

Wie in Fig. 2 weiter zu sehen, kann das Satellitentelefon 20 in an sich bekannter Weise eine drahtlose Kommunikationseinrichtung, die eine Sende-/Empfangseinrichtung 23 und eine Antenne 26 enthalten kann, aufweisen. Die Steuereinheit 21 kann als Mikrocontroller ausgebildet sein. Ferner ist zumindest eine Speichereinrichtung 24 vorgesehen, in der u.a. zeit-und ortsabhängige meteorologische Daten, die eine Wettervorhersage betreffen, sowie eine Firmware gespeichert sein können. Zudem kann im Satellitentelefon 20 ein Messgerät 22 implementiert sein. Mit dem Messgerät 22 kann beispielsweise die Signalstärke von Signalen, die beispielsweise von den in Fig. 1 gezeigten Kommunikationssatelliten 30.1 bis 30n, zu denen jeweils zu einem aktuellen Zeitpunkt t0 eine Sichtverbindung besteht, empfangen werden, gemessen werden. Denkbar ist ferner, dass das Satellitentelefon 20 wenigstens einen Sensor, der beispielsweise als Temperatursensor, als Feuchtigkeitssensor oder als Luftdrucksensor ausgebildet sein kann, aufweist. Lediglich beispielhaft sind ein Temperatursensor 27 und ein Luftdrucksensor 28 gezeigt. Die beiden Sensoren 27 und 28 dienen dazu, aktuelle meteorologische Daten zu ermitteln, die bei einem initialen Verbindungsaufbau ebenfalls vom Satellitentelefon 20 zur Auswahl eines geeigneten Kommunikationssatelliten berücksichtigt werden können. Gegebenenfalls weist das Satellitentelefon 20 eine eigene Wetterapp auf, die von einem Wetterdienst gelieferte meteorologische Daten zur Wettervorhersage dem Satellitentelefon bereitstellen kann. Ferner kann das Satellitentelefon 20 eine Eingabeeinrichtung 25 aufweisen, über die beispielsweise die Rufnummer eines zu rufenden Satellitentelefons und eine Anwendung eingegeben werden können. Als Anwendung kann beispielsweise ein Telefongespräch, ein Kurznachrichtendienst oder ein Streamingdienst ausgewählt werden.

Nachfolgend wird die Funktionsweise des in Fig. 1 gezeigten satellitenbasierten Kommunikationssystems 10 in Verbindung mit dem Satellitentelefon 20 näher erläutert.

Angenommen sei nunmehr, dass der Nutzer 40 mittels seines Satellitentelefons 20 eine Kommunikationsverbindung zu dem Satellitentelefon 90 aufbauen möchte. Ferner sei angenommen, dass von der Wetterstation 50 berechnete zeit-und ortsabhängige meteorologische Daten, die Wettervorhersagen betreffen, über die Bodenstation 60 zum Satellitentelefon 20 übertragen und dort in der Speichereinrichtung 24 hinterlegt worden sind. Weiterhin sei angenommen, dass die abgespeicherten zeit-und ortsabhängigen meteorologischen Daten beispielsweise zumindest ein zeitliches Intervall erfassen, welches sich von einem Zeitpunkt t0, zu dem eine Kommunikationsverbindung initial aufgebaut werden soll, bis zu einer Zeit t1 erstreckt. Ein solches Zeitintervall kann beispielsweise 10 Minuten betragen. Diese Zeitdauer entspricht in etwa der Zeitdauer, während der eine Kommunikationsverbindung zwischen dem Satellitentelefon 20 und einem Iridium-Kommunikationssatelliten bestehen kann, bevor ein Satellitenwechsel notwendig wird.

Angenommen sei weiterhin, dass der Benutzer 40 über die Eingabeeinrichtung 25 dem Satellitentelefon 20 gerade signalisiert hat, dass nunmehr eine Kommunikationsverbindung eingeleitet werden soll. Dieser Zeitpunkt wird als aktueller Zeitpunkt t0 betrachtet, zu dem der Benutzer 40 z.B. die Rufnummer des Satellitentelefons 90 und/oder eine Anwendung, z.B. "Telefongespräch" eingegeben hat.

Das Satellitentelefon 20 ermittelt nunmehr in an sich bekannter Weise vorzugsweise seine eigene geographische Position sowie die Kommunikationssatelliten 30.1 bis 30.n bzw. deren Positionen, die zum aktuellen Zeitpunkt t0 und vorzugsweise auch bis Zeitpunkt t1 oder bis zum prognostizierten Ende der Kommunikationsverbindung im Sichtbereich des Satellitentelefons 20 sind. Ferner ermittelt das Satellitentelefon 20 zum Beispiel mit Hilfe des Messgeräts 22 jeweils die Empfangssignalstärke der von diesen Kommunikationssatelliten insbesondere zum Zeitpunkt t0 empfangenen Signale. Im nächsten Schritt wählt das Satellitentelefon 20 einen der Kommunikationssatelliten 30.1-30n, zu denen zum Zeitpunkt t0 eine Sichtverbindung besteht, aus und leitet beispielsweise unter Ansprechen auf die vom Benutzer eingegebene Telefonnummer des Satellitentelefons 90 den Aufbau einer Kommunikationsverbindung beispielsweise zu dem Kommunikationssatelliten 30.3 im Wesentlichen zum aktuellen Zeitpunkt t0 ein. Der Ausdruck "im Wesentlichen zum aktuellen Zeitpunkt" erfasst den Umstand, dass zwischen der Eingabe eines Verbindungsaufbauwunsches, also z.B. der Eingabe einer Rufnummer, und weiteren Verarbeitungsschritten - wie z.B. dem Ermitteln der Kommunikationssatelliten, zu denen eine Sichtverbindung zum Zeitpunkt t0 besteht, dem Ermitteln der Signalstärken der von den ermittelten Kommunikationssatelliten empfangenen Signalen zum aktuellen Zeitpunkt t0 und dem Auswählen eines der ermittelten Kommunikationssatelliten in Abhängigkeit der ermittelten Signalstärken und der bereitgestellten zeit- und ortsabhängigen meteorologischen Daten - eine endliche Verarbeitungszeit des Satellitentelefons 20 liegt.

Die Auswahl eines Kommunikationssatelliten erfolgt beispielsweise in Abhängigkeit von den vom Satellitentelefon 20 ermittelten Signalstärken und von den bereitgestellten zeit-und ortsabhängigen meteorologischen Daten. Hierzu kann in der Speichereinrichtung 24 ein Satellitenauswahl-Optimierungsalgorithmus hinterlegt sein, der von der Steuereinheit 21 ausgeführt werden kann, um beispielsweise in Abhängigkeit von den bereitgestellten zeit- und ortsabhängigen meteorologischen Daten, der Position des Satellitentelefons 20 und den sich während eines Zeitintervalls ändernden Positionen der Kommunikationssatelliten 30.1 bis 30.n richtungsabhängige atmosphärische Einflüsse und deren zeitliche Veränderungen, die für das Satellitentelefon 20 zum aktuellen Zeitpunkt relevant sind, zu berechnen. Das Zeitintervall, welches durch den aktuellen Zeitpunkt t0 und einen späteren Zeitpunkt t1 definiert werden kann, kann beispielsweise 10 Minuten dauern. Bei der Auswahl eines geeigneten Kommunikationssatelliten ist die Berücksichtigung atmosphärischer Einflüsse, die durch die zeit- und ortsabhängigen meteorologischen Daten beschrieben werden, sinnvoll, da die Signalstärken der von den Kommunikationssatelliten 30.1-30.abgestrahlten Signale aufgrund der atmosphärischen Einflüsse stark schwanken können. Insbesondere sind Inversionswetterlagen, wie Nebel, starker Schneefall oder Regen besonderes starke atmosphärische Störungen, die die Ausbreitung von Funkwellen teils erheblich behindern können.

Unter Ausführung des Satellitenauswahl-Optimierungsalgorithmus kann das Satellitentelefon 20 nunmehr denjenigen Kommunikationssatelliten auswählen, zu dem bei der berücksichtigen Wettervorhersage während des Zeitintervalls von t0 bis t1 und dem Standort des Satellitentelefons 20 eine Sichtverbindung mit ausreichend hoher, bzw. optimaler Qualität hinsichtlich eines initialen Verbindungsaufbaus zum aktuellen Zeitpunkt t0 besteht.

Neben den zuvor beschriebenen Parametern kann auch eine prognostizierte Verbindungsdauer bei der Auswahl des geeignetsten Kommunikationssatelliten vom Satellitenauswahl-Optimierungsalgorithmus mitberücksichtigt werden. So kann beispielsweise in Abhängigkeit einer kommunikationsbezogenen Anwendung, die der Benutzer 40 über die Eingabeeinrichtung 25 an seinem Satellitentelefon 20 auswählt, eine Verbindungsdauer prognostiziert werden. So dauert eine zu erwartende Verbindungsdauer bei einer Telefonverbindung in der Regel länger, als wenn der Nutzer lediglich eine WhatsApp Mitteilung an das gerufene Satellitentelefon 90 übertragen möchte. Wenn als Anwendung zum Beispiel eine WhatsApp Text-Übermittlung ausgewählt wird, spielen Positionsänderungen der Kommunikationssatelliten 30.1 bis 30.n und auch eine längere Wetterprognose bezüglich des aktuellen Zeitpunkt t0 eher eine untergeordnete Rolle. Wird hingegen als Anwendung ein Telefongespräch ausgewählt, sind sowohl Wetterveränderungen als auch Positionsveränderungen der Kommunikationssatelliten 30.1 bis 30.n höher zu gewichten, um einen geeigneten Kommunikationssatelliten zum initialen Aufbau einer Kommunikationsverbindung vom Satellitentelefon 20 auszuwählen. Die entsprechenden Gewichtungen können im Satellitenauswahl-Optimierungsalgorithmus entsprechend berücksichtigt werden.

Das Satellitentelefon 20 ist demzufolge dazu ausgebildet, vorzugsweise in Abhängigkeit der beispielsweise im Speicher 24 hinterlegten zeit-und ortsabhängigen meteorologischen Daten, seiner eigenen Position, den Signalstärken und den Positionen der Kommunikationssatelliten 30.1-30.n die Qualität jeder Sichtverbindung zu diesen Satelliten beginnend vom aktuellen Zeitpunkt t0 bis zum Zeitpunkt t1, also beispielsweise während einer Zeitdauer von 10 Minuten, im Voraus zu berechnen und eine mittlere Übertragungsqualität für jede der Sichtverbindungen während dieses Zeitintervalls zu berechnen, wobei, je nach Implementierung, auch eine vom Satellitentelefon 20 einstellbare Sendefrequenz und/oder einstellbare Sendeleistung und/oder die Zeitdauer berücksichtigt werden, während der eine Sichtverbindung zu den Kommunikationssatelliten 30.1 bis 30.n besteht. Unter Ansprechen auf all diese Parameter und Daten kann die Steuereinheit 21 den geeignetsten Kommunikationssatelliten auswählen, zu dem initial das Satellitentelefon 20 eine Kommunikationsverbindung aufbauen soll. Angemerkt sei an dieser Stelle, dass die durch den aktuellen Zeitpunkt t0 und den Zeitpunkt t1 festgelegte Zeitspanne derart gewählt wird, dass während dieser Zeitdauer zumindest zwischen zwei der Kommunikationssatelliten 30.1 bis 30.n, zu denen zum Zeitpunkt t0 eine Sichtverbindung zum Satellitentelefon bestand, noch bestehen wird.

Wie bereits gesagt können die beispielsweise von der Wetterstation 50 ermittelten zeit-und ortsabhängigen meteorologischen Daten, die Wettervorhersagen betreffen, kontinuierlich oder zu diskreten Zeitpunkten aktualisiert und beispielsweise über die Bodenstation 60 zum Satellitentelefon 20 übertragen werden.

Da die Einflüsse der atmosphärischen Bedingungen nicht nur, wie bereits erläutert, richtungsabhängig, sondern auch frequenzabhängig sind, kann das Satellitentelefon 20 dazu ausgebildet sein, seine Sendefrequenz in Abhängigkeit von den zeit-und ortsabhängigen meteorologischen Daten, die zumindest zum aktuellen Zeitpunkt t0 für das Satellitentelefon 20 von Bedeutung sind, derart einstellen, dass die vom Satellitentelefon 20 ausgestrahlten Signale möglichst gering durch die atmosphärischen Bedingungen während der Zeitdauer von t0 bis t1 gedämpft werden. Gegebenenfalls kann auch die Sendestärke des Satellitentelefons 20 insbesondere in Abhängigkeit der zeit-und Orts abhängigen meteorologischen Daten erhöht oder erniedrigt werden. Die einzustellenden Größen können neben dem auszuwählenden Kommunikationssatelliten ebenfalls vom Satellitenauswahl-Optimierungsalgorithmus berechnet werden.

Wie bereits erwähnt, kann das Satellitentelefon 20 mehrere Sensoren 27 und 28 aufweisen, die beispielsweise die aktuelle Windgeschwindigkeit, die aktuelle Temperatur, den aktuellen Luftdruck, die aktuelle Luftfeuchtigkeit als meteorologische Größen messen, die zusammen mit den beispielsweise von der Wetterstation 50 bereitgestellten zeit- und ortsabhängigen meteorologischen Daten zur Auswahl eines geeigneten Kommunikationssatelliten vom Satellitentelefon 20 mitberücksichtigt werden können.

Zumindest einige der oben erläuterten beispielhaften Aspekte werden nachfolgend noch einmal zusammengefasst.

Es wird ein Verfahren zum Aufbauen einer Satellitenkommunikationsverbindung von einem Satellitentelefon 20 zu einem Kommunikationssatelliten 30.3 eines in Fig. 1 beispielhaft gezeigten satellitenbasierten Kommunikationssystems 10 zur Verfügung gestellt. Das Kommunikationssystem 10 kann mehrere Kommunikationssatelliten 30.1-30.n, 70 aufweisen, die, auf verschiedene Umlaufbahnen verteilt, die Erde umkreisen und jeweils dazu ausgebildet sind, eine vorbestimmte Anzahl an Kommunikationsverbindungen von und zu Satellitentelefonen gleichzeitig abzuwickeln, wobei das Verfahren folgende Verfahrensschritte aufweist:
a) Bereitstellen von zeit- und ortabhängigen meteorologischen Daten einem Satellitentelefon 20;
b) Ermitteln, durch das Satellitentelefon 20, einer Mehrzahl von Kommunikationssatelliten 30.1-30-n des satellitenbasierten Kommunikationssystems 10, zu denen zu einem aktuellen Zeitpunkt t0 eine Sichtverbindung zu dem Satellitentelefon 20 besteht;
c) Ermitteln, durch das Satellitentelefon, der Signalstärken der von den in Schritt b) ermittelten Kommunikationssatelliten 30.1-30.n empfangenen Signale zum aktuellen Zeitpunkt t0;
d) Auswählen, durch das Satellitentelefon 20, eines der in Schritt b) ermittelten Kommunikationssatelliten 30.1-30.n in Abhängigkeit von der in Schritt c) ermittelten Signalstärken und von den in Schritt a) bereitgestellten zeit- und ortsabhängigen meteorologischen Daten, und
e) Einleiten, durch das Satellitentelefon 20, des Aufbaus einer Kommunikationsverbindung zu dem in Schritt d) ausgewählten Kommunikationssatelliten 30.3 im Wesentlichen zum aktuellen Zeitpunkt t0.

Zweckmäßigerweise werden in Schritt a) zumindest einige der zeit- und ortsabhängigen meteorologischen Daten vorhergesagt. Beispielsweise werden die zeit- und ortsabhängigen meteorologischen Daten rechnergestützt von wenigstens einer Wetterdienststation 50 vorhergesagt und zum Satellitentelefon 10 übertragen werden.

Vorteilhafterweise kann das Verfahren weiter dadurch gekennzeichnet sein, dass in Schritt a) die zeit- und ortabhängigen meteorologischen Daten für eine Zeitspanne bereitgestellt werden, die zumindest ein Zeitintervall, das durch den aktuellen Zeitpunkt t0 und einen späteren Zeitpunkt t1 festgelegt wird, umfasst, und dass in Schritt d) durch das Satellitentelefon 20 der Kommunikationssatellit 30.3 in Abhängigkeit von den in Schritt c) ermittelten Signalstärken und von den in Schritt a) bereitgestellten zeit- und ortsabhängigen meteorologischen Daten, die für das Zeitintervall, das durch den aktuellen Zeitpunkt t0 und den späteren Zeitpunkt t1 festgelegt wird, vorhergesagt worden sind, ausgewählt wird.

Zweckmäßigerweise kann die Dauer des Zeitintervalls, das durch den aktuellen Zeitpunkt t0 und den späteren Zeitpunkt t1 festgelegt wird, derart gewählt werden, dass während der Dauer des Zeitintervalls vom Satellitentelefon 20 jeweils eine Sichtverbindung zu zumindest zwei der in Schritt b) ermittelten Kommunikationssatelliten 30.1-30.n besteht.

Die in Schritt e) aufgebaute Kommunikationsverbindung kann beispielsweise über das satellitenbasierte Kommunikationssystem 10 zu einem zweiten Satellitentelefon 90 hergestellt werden.

Vorteilhafterweise können die in Schritt a) bereitgestellten zeit- und ortsabhängigen meteorologischen Daten kontinuierlich oder zu diskreten Zeitpunkten aktualisiert und, wenn gewünscht, d.h. zum Beispiel wenn die Änderungen relevant für einen Verbindungsaufbau sind, zum Satellitentelefon 20 übertragen werden.

Vorteilhafterweise kann die Sendefrequenz des Satellitentelefons 20 in Abhängigkeit von den in Schritt a) bereitgestellten zeit- und ortsabhängigen meteorologischen Daten, die zumindest zum aktuellen Zeitpunkt t0 für das Satellitentelefon 20 von Bedeutung sind, eingestellt werden.

Eine vorteilhafte Weiterbildung sieht vor, dass vor Ausführung des Schritts b) am Satellitentelefon 20 eine satellitenkommunikationsbezogene Anwendung ausgewählt wird, dass in Abhängigkeit der ausgewählten Anwendung eine Verbindungsdauer prognostiziert wird, und dass in Schritt d) der Kommunikationssatellit 30.3 auch in Abhängigkeit von der prognostizierten Verbindungsdauer ausgewählt wird.

Gemäß einem vorteilhaften Aspekt wird ein Satellitentelefon 20 zum Ausführen eines Verfahrens gemäß einem der vorstehenden Ansprüche geschaffen, wobei das Satellitentelefon 20 folgende Merkmale aufweisen kann: eine Messeinrichtung 22, die zum Ermitteln der Signalstärke von Signalen, die von Kommunikationssatelliten 30.1-30.n, 70 eines satellitenbasierten Kommunikationssystems 10 ausgesendet werden, ausgebildet ist, eine Speichereinrichtung 24, in der zeit- und ortabhängige meteorologische Daten abgelegt sind, eine Steuereinheit 21, die dazu ausgebildet ist, i) eine Mehrzahl von Kommunikationssatelliten 30.1-30.n des satellitenbasierten Kommunikationssystems 10 zu ermitteln, zu denen zu einem aktuellen Zeitpunkt t0 eine Sichtverbindung zu dem Satellitentelefon 20 besteht, ii) einen der ermittelten Kommunikationssatelliten 30.1-30.n in Abhängigkeit von den ermittelten Signalstärken und von den in der Speichereinrichtung 24 abgelegten zeit- und ortsabhängigen meteorologischen Daten auszuwählen, und iii) den Aufbau einer Kommunikationsverbindung zu dem ausgewählten Kommunikationssatelliten 30.3 im Wesentlichen zum aktuellen Zeitpunkt t0 aufzubauen.

Vorteilhafterweise kann die Steuereinheit 21 dazu ausgebildet sein, die Sendefrequenz in Abhängigkeit von den in der Speichereinrichtung 24 abgelegten zeit- und ortsabhängigen meteorologischen Daten, die zumindest zum aktuellen Zeitpunkt t0 für das Satellitentelefon 20 von Bedeutung sind, einzustellen.

Vorteilhafterweise kann das Satellitentelefon 20 eine Eingabeeinrichtung 25 aufweisen, die zur Auswahl einer satellitenkommunikationsbezogenen Anwendung ausgebildet ist, wobei die Steuereinheit 21 dazu ausgebildet ist, in Abhängigkeit der ausgewählten Anwendung eine Verbindungsdauer vorherzusagen und gemäß ii) einen der ermittelten Kommunikationssatelliten 30.1-30.n auch in Abhängigkeit von der prognostizierten Verbindungsdauer auszuwählen.

Um eine präzise Wettervorhersage zu erhalten, kann vorteilhafterweise eine Wetterapp im Satellitentelefon 20 gespeicherten sein, wobei die Steuereinheit 21 dazu ausgebildet ist, die Wetterapp auszuführen, um zeit- und ortsabhängige meteorologische Daten zu erhalten, die in der Speichereinrichtung 24 zur weiteren Verwendung, d.h. insbesondere zur Auswahl eines geeigneten Kommunikationssatelliten, abgelegt werden können.

## Patentansprüche

1. Verfahren zum Aufbauen einer Satellitenkommunikationsverbindung von einem Satellitentelefon (20) zu einem Kommunikationssatelliten (30.3) eines satellitenbasierten Kommunikationssystems (10), welches mehrere Kommunikationssatelliten (30.1-30.n, 70) aufweist, die, auf verschiedene Umlaufbahnen verteilt, die Erde umkreisen und jeweils dazu ausgebildet sind, eine vorbestimmte Anzahl an Kommunikationsverbindungen von und zu Satellitentelefonen gleichzeitig abzuwickeln, wobei das Verfahren folgende Verfahrensschritte aufweist:
a) Bereitstellen von zeit- und ortsabhängigen meteorologischen Daten in einem Satellitentelefon (20) ;
b) Ermitteln, durch das Satellitentelefon (20), einer Mehrzahl von Kommunikationssatelliten (30.1-30-n) des satellitenbasierten Kommunikationssystems (10), zu denen zu einem aktuellen Zeitpunkt (t0) eine Sichtverbindung zu dem Satellitentelefon (20) besteht;
c) Ermitteln, durch das Satellitentelefon, der Signalstärken der von den in Schritt b) ermittelten Kommunikationssatelliten (30.1-30.n) empfangenen Signale zum aktuellen Zeitpunkt (t0);
d) Auswählen, durch das Satellitentelefon (20), eines der in Schritt b) ermittelten Kommunikationssatelliten (30.1-30.n) in Abhängigkeit von der in Schritt c) ermittelten Signalstärken und von den in Schritt a) bereitgestellten zeit- und ortsabhängigen meteorologischen Daten, und
e) Einleiten, durch das Satellitentelefon (20), des Aufbaus einer Kommunikationsverbindung zu dem in Schritt d) ausgewählten Kommunikationssatelliten (30.3) im Wesentlichen zum aktuellen Zeitpunkt (t0).

2. Verfahren nach Anspruch 1,
**dadurch gekennzeichnet, dass**
in Schritt a) zumindest einige der zeit- und ortsabhängigen meteorologischen Daten vorhergesagt werden.

3. Verfahren nach Anspruch 2,
**dadurch gekennzeichnet, dass**
in Schritt a) die zeit- und ortsabhängigen meteorologischen Daten für eine Zeitspanne bereitgestellt werden, die zumindest ein Zeitintervall, das durch den aktuellen Zeitpunkt (t0) und einen späteren Zeitpunkt (t1) festgelegt wird, umfasst, und dass
in Schritt d) durch das Satellitentelefon (20) der Kommunikationssatellit (30.3)in Abhängigkeit von den in Schritt c) ermittelten Signalstärken und von den in Schritt a) bereitgestellten zeit- und ortsabhängigen meteorologischen Daten, die für das Zeitintervall, das durch den aktuellen Zeitpunkt (t0) und den späteren Zeitpunkt (t1) festgelegt wird, vorhergesagt worden sind, ausgewählt wird.

4. Verfahren nach Anspruch 3,
**dadurch gekennzeichnet, dass**
die Dauer des Zeitintervalls, das durch den aktuellen Zeitpunkt (t0) und den späteren Zeitpunkt (t1) festgelegt wird, derart gewählt wird, dass während der Dauer des Zeitintervalls vom Satellitentelefon (20) jeweils eine Sichtverbindung zu zumindest zwei der in Schritt b) ermittelten Kommunikationssatelliten (30.1-30.n) besteht.

5. Verfahren nach einem der vorstehenden Ansprüche, **dadurch gekennzeichnet, dass**
die in Schritt e) aufgebaute Kommunikationsverbindung über das satellitenbasierte Kommunikationssystem zu einem zweiten Satellitentelefon (90) hergestellt wird.

6. Verfahren nach einem der vorstehenden Ansprüche, **dadurch gekennzeichnet, dass**
die in Schritt a) bereitgestellten zeit- und ortsabhängigen meteorologischen Daten kontinuierlich oder zu diskreten Zeitpunkten aktualisiert werden.

7. Verfahren nach einem der vorstehenden Ansprüche, **dadurch gekennzeichnet, dass**
die Sendefrequenz des Satellitentelefons (20) in Abhängigkeit von den in Schritt a) bereitgestellten zeit- und ortsabhängigen meteorologischen Daten, die zumindest zum aktuellen Zeitpunkt (t0) für das Satellitentelefon (20) von Bedeutung sind, eingestellt wird.

8. Verfahren nach einem der vorstehenden Ansprüche, **dadurch gekennzeichnet, dass**
vor Ausführung des Schritts b) am Satellitentelefon (20) eine satellitenkommunikationsbezogene Anwendung ausgewählt wird, dass
in Abhängigkeit der ausgewählten Anwendung eine Verbindungsdauer prognostiziert wird, und dass in Schritt d) der Kommunikationssatellit (30.3) auch in Abhängigkeit von der prognostizierten Verbindungsdauer ausgewählt wird.

9. Satellitentelefon (20) zum Ausführen eines Verfahrens gemäß einem der vorstehenden Ansprüche, aufweisend:
eine Messeinrichtung (22), die zum Ermitteln der Signalstärke von Signalen, die von
Kommunikationssatelliten (30.1-30.n, 70) eines satellitenbasierten Kommunikationssystems (10) ausgesendet werden, ausgebildet ist,
eine Speichereinrichtung (24), in der zeit- und ortsabhängige meteorologische Daten abgelegt sind, eine Steuereinheit (21), die dazu ausgebildet ist,
i) eine Mehrzahl von Kommunikationssatelliten (30.1-30.n) des satellitenbasierten Kommunikationssystems (10) zu ermitteln, zu denen zu einem aktuellen Zeitpunkt (t0) eine Sichtverbindung zu dem Satellitentelefon (20) besteht,
ii) einen der ermittelten Kommunikationssatelliten (30.1-30.n) in Abhängigkeit von den ermittelten Signalstärken und von den in der Speichereinrichtung (24) abgelegten zeit- und ortsabhängigen meteorologischen Daten auszuwählen, und
iii) den Aufbau einer Kommunikationsverbindung zu dem ausgewählten Kommunikationssatelliten (30.3) im Wesentlichen zum aktuellen Zeitpunkt (t0) aufzubauen.

10. Satellitentelefon nach Anspruch 9,
**dadurch gekennzeichnet, dass**
die Steuereinheit (21) dazu ausgebildet ist, die Sendefrequenz in Abhängigkeit von den in der Speichereinrichtung (24) abgelegten zeit- und ortsabhängigen meteorologischen Daten, die zumindest zum aktuellen Zeitpunkt (t0) für das Satellitentelefon (20) von Bedeutung sind, einzustellen.

11. Satellitentelefon nach Anspruch 9 oder 10,
**gekennzeichnet durch**
eine Eingabeeinrichtung (25), die zur Auswahl einer satellitenkommunikationsbezogenen Anwendung ausgebildet ist, wobei
die Steuereinheit (21) dazu ausgebildet ist, in Abhängigkeit der ausgewählten Anwendung eine Verbindungsdauer vorherzusagen und gemäß ii) einen der ermittelten Kommunikationssatelliten (30.1-30.n) auch in Abhängigkeit von der prognostizierten Verbindungsdauer auszuwählen.

12. Satellitentelefon nach einem der Ansprüche 9 bis 11, **dadurch gekennzeichnet, dass**
das Satellitentelefon eine darin gespeicherte Wetterapp aufweist, wobei die Steuereinheit (21) dazu ausgebildet ist, die Wetterapp auszuführen, um zeit-und ortsabhängige meteorologische Daten zu erhalten.

## Claims

1. A method for establishing a satellite communication link from a satellite telephone (20) to a communication satellite (30.3) of a satellite-based communication system (10) which comprises a plurality of communication satellites (30.1-30.n, 70) which, distributed in different orbits, orbit the earth and are each designed to simultaneously handle a predetermined number of communication links from and to satellite telephones, the method comprising the following method steps:
a) providing time- and location-dependent meteorological data in a satellite telephone (20);
b) determining, by the satellite telephone (20), a plurality of communication satellites (30.1-30-n) of the satellite-based communication system (10) to which a line-of-sight connection to the satellite telephone (20) exists at a current point in time (t0);
c) determining, by the satellite telephone, the signal strengths of the signals received from the communication satellites (30.1-30.n) determined in step b) at the current point in time (t0);
d) selecting, by the satellite telephone (20), one of the communication satellites (30.1-30.n) determined in step b) in dependence on the signal strengths determined in step c) and on the time- and location-dependent meteorological data provided in step a), and
e) initiating, by the satellite telephone (20), the establishment of a communication link to the communication satellite (30.3) selected in step d) substantially at the current point in time (t0).<

2. The method according to claim 1,
**characterized in that**
in step a) at least some of the time- and location-dependent meteorological data are predicted.

3. The method according to claim 2,
**characterized in that**
in step a) the time- and location-dependent meteorological data are provided for a time period which comprises at least one time interval which is defined by the current point in time (t0) and a later point in time (t1), and **in that**
in step d), the communication satellite (30.3) is selected by the satellite telephone (20) in dependence of the signal strengths determined in step c) and of the time- and location-dependent meteorological data provided in step a), which have been predicted for the time interval defined by the current point in time (t0) and the later point in time (t1).

4. The method according to claim 3,
**characterized in that**
the duration of the time interval, which is defined by the current point in time (t0) and the later point in time (t1), is selected such that during the duration of the time interval there is a line of sight from the satellite telephone (20) to at least two of the communication satellites (30.1-30.n) determined in step b).

5. The method according to any one of the preceding claims,
**characterized in that**
the communication link established in step e) is established via the satellite-based communication system to a second satellite telephone (90).

6. The method according to any one of the preceding claims,
**characterized in that**
the time- and location-dependent meteorological data provided in step a) are updated continuously or at discrete points in time.

7. The method according to any one of the preceding claims,
**characterized in that**
the transmission frequency of the satellite telephone (20) is set in dependence of the time- and location-dependent meteorological data provided in step a), which are of significance for the satellite telephone (20) at least at the current point in time (t0).

8. The method according to any one of the preceding claims,
**characterized in that**
a satellite communication-related application is selected on the satellite telephone (20) before step b) is carried out, **in that**
a connection duration is predicted in dependence of the selected application, and **in that** in step d), the communication satellite (30.3) is selected also in dependence of the predicted connection duration.

9. A satellite telephone (20) for carrying out a method according to any one of the preceding claims, comprising
a measuring device (22) which is adapted to determine the signal strength of signals transmitted by communication satellites (30.1-30.n, 70) of a satellite-based communication system (10),
a memory device (24) in which time- and location-dependent meteorological data are stored,
a control unit (21) which is adapted for
i) determining a plurality of communication satellites (30.1-30.n) of the satellite-based communication system (10) to which a line-of-sight connection to the satellite telephone (20) exists at a current point in time (t0),
ii) selecting one of the determined communication satellites (30.1-30.n) in dependence of the determined signal strengths and of the time- and location-dependent meteorological data stored in the memory device (24), and
iii) establishing a communication link to the selected communication satellite (30.3) essentially at the current point in time (t0).

10. The satellite telephone according to claim 9,
**characterized in that**
the control unit (21) is adapted to set the transmission frequency in dependence of the time-dependent and location-dependent meteorological data stored in the memory device (24), which are of significance for the satellite telephone (20) at least at the current point in time (t0).

11. The satellite telephone according to claim 9 or 10,
**characterized by**
an input device (25) which is adapted for selecting a satellite communication-related application, wherein
the control unit (21) is adapted to predict a connection duration in dependence of the selected application and to select according to ii) one of the determined communication satellites (30.1-30.n) also in dependence of the predicted connection duration.

12. The satellite telephone according to any one of claims 9 to 11,
**characterized in that**
the satellite telephone comprises a weather app stored therein, wherein the control unit (21) is adapted to execute the weather app to obtain time- and location-dependent meteorological data.

## Revendications

1. Procédé d'établissement d'une connexion de communication par satellite d'un téléphone satellite (20) avec un satellite de communication (30.3) d'un système de communication (10) basé sur les satellites, qui présente plusieurs satellites de communication (30.1-30.n, 70) qui, répartis sur différentes orbites, gravitent autour de la terre et sont réalisés respectivement afin d'effectuer simultanément un nombre prédéterminé de connexions de communication de et vers des téléphones satellites, dans lequel le procédé présente les étapes de procédé suivantes :
a) la fourniture de données météorologiques en fonction du temps et de la position dans un téléphone satellite (20) ;
b) la détermination, par le téléphone satellite (20), d'une pluralité de satellites de communication (30.1-30-n) du système de communication (10) basé sur les satellites, avec lesquels à un moment actuel (t0), une connexion visuelle avec le téléphone satellite (20) existe ;
c) la détermination, par le téléphone satellite, des intensités des signaux reçus par les satellites de communication (30.1-30.n) déterminés à l'étape b) au moment actuel (t0) ;
d) la sélection, par le téléphone satellite (20), d'un des satellites de communication (30.1-30.n) déterminés à l'étape b) en fonction des intensités de signal déterminées à l'étape c) et des données météorologiques en fonction du temps et de la position fournies à l'étape a), et
e) l'initiation, par le téléphone satellite (20), de l'établissement d'une connexion de communication avec le satellite de communication (30.3) sélectionné à l'étape d) sensiblement au moment actuel (t0).

2. Procédé selon la revendication 1,
**caractérisé en ce que**
à l'étape a), au moins certaines des données météorologiques en fonction du temps et de la position sont prédites.

3. Procédé selon la revendication 2,
**caractérisé en ce que**
à l'étape a), les données météorologiques en fonction du temps et de la position sont fournies pour une période qui comprend au moins un intervalle de temps qui est défini par le moment actuel (t0) et un moment ultérieur (t1), et **en ce que**
à l'étape d), le satellite de communication (30.3) est sélectionné par le téléphone satellite (20) en fonction des intensités de signal déterminées à l'étape c) et des données météorologiques en fonction du temps et de la position fournies à l'étape a) qui ont été prédites pour l'intervalle de temps qui est défini par le moment actuel (t0) et le moment ultérieur (t1).

4. Procédé selon la revendication 3,
**caractérisé en ce que**
la durée de l'intervalle de temps qui est défini par le moment actuel (t0) et le moment ultérieur (t1), est choisie de telle manière que pendant la durée de l'intervalle de temps du téléphone satellite (20) respectivement, une connexion visuelle avec au moins deux des satellites de communication (30.1-30.n) déterminés à l'étape b) existe.

5. Procédé selon l'une quelconque des revendications précédentes,
**caractérisé en ce que**
la connexion de communication établie à l'étape e) est établie par le biais du système de communication basé sur les satellites avec un second téléphone satellite (90).

6. Procédé selon l'une quelconque des revendications précédentes,
**caractérisé en ce que**
les données météorologiques en fonction du temps et de la position fournies à l'étape a) sont actualisées en continu ou à des moments discrets.

7. Procédé selon l'une quelconque des revendications précédentes,
**caractérisé en ce que**
la fréquence d'émission du téléphone satellite (20) est réglée en fonction des données météorologiques en fonction du temps et de la position fournies à l'étape a) qui sont pertinentes au moins au moment actuel (t0) pour le téléphone satellite (20).

8. Procédé selon l'une quelconque des revendications précédentes,
**caractérisé en ce que**
avant la mise en oeuvre de l'étape b), une application liée à la communication par satellite est sélectionnée au niveau du téléphone satellite (20), **en ce que**
en fonction de l'application sélectionnée, une durée de connexion est prévue, et **en ce que**
à l'étape d), le satellite de communication (30.3) est aussi sélectionné en fonction de la durée de connexion prévue.

9. Téléphone satellite (20) pour la mise en oeuvre d'un procédé selon l'une quelconque des revendications précédentes présentant :
un dispositif de mesure (22) qui est réalisé pour la détermination de l'intensité de signaux qui sont émis par des satellites de communication (30.1-30-n, 70) d'un système de communication (10) basé sur les satellites,
un dispositif de mémorisation (24), dans lequel des données météorologiques en fonction du temps et de la position sont enregistrées,
une unité de commande (21) qui est réalisée afin
i) de déterminer une pluralité de satellites de communication (30.1-30.n) du système de communication (10) basé sur les satellites, avec lesquels à un moment actuel (t0), une connexion visuelle avec le téléphone satellite (20) existe,
ii) de sélectionner l'un des satellites de communication (30.1-30.n) déterminés en fonction des intensités de signal déterminées et des données météorologiques en fonction du temps et de la position enregistrées dans le dispositif de mémorisation (24), et
iii) d'établir l'établissement d'une connexion de communication avec le satellite de communication (30.3) sélectionné sensiblement au moment actuel (t0).

10. Téléphone satellite selon la revendication 9, **caractérisé en ce que**
l'unité de commande (21) est réalisée afin de régler la fréquence d'émission en fonction des données météorologiques en fonction du temps et de la position enregistrées dans le dispositif de mémorisation (24) qui sont pertinentes au moins au moment actuel (t0) pour le téléphone satellite (20).

11. Téléphone satellite selon la revendication 9 ou 10, **caractérisé par**
un dispositif de saisie (25) qui est réalisé pour la sélection d'une application liée à la communication par satellite, dans lequel
l'unité de commande (21) est réalisée afin de prédire en fonction de l'application sélectionnée une durée de connexion et de sélectionner selon ii) l'un des satellites de communication (30.1-30.n) déterminés aussi en fonction de la durée de connexion prévue.

12. Téléphone satellite selon l'une quelconque des revendications 9 à 11,
**caractérisé en ce que**
le téléphone satellite présente une application météorologique enregistrée dans celui-ci, dans lequel l'unité de commande (21) est réalisée afin de mettre en oeuvre l'application météorologique pour recevoir des données météorologiques en fonction du temps et de la position.
